# EUROPEAN PATENT APPLICATION

(11) **EP 3 937 113 A1**
(43) Date of publication of application: **12.01.2022**
(21) Application number: 19918287.4
(22) Date of filing: 04.03.2019
(51) Int. Cl.: G06Q 50/10

(54) **FACILITY INTRODUCTION SUPPORT SYSTEM**

(71) Applicant: Fuji Corporation, Chiryu-shi, Aichi 472-8686 (JP)
(72) Inventor: HIGASHIDA, Akihiro, Chiryu-shi, Aichi 472-8686 (JP); KODAMA, Seigo, Chiryu-shi, Aichi 472-8686 (JP); FUJITA, Masatoshi, Chiryu-shi, Aichi 472-8686 (JP)
(74) Representative: Grünecker Patent- und Rechtsanwälte PartG mbB
(86) International application number: PCT/JP2019/008357
(87) International publication number: WO 2020/178937

(57) **Abstract**

A facility introduction support system for supporting a customer when the customer introduces a facility, includes a storage section configured to store an introduction record in which specification information of the facility including information of at least one of a target object and a work content to be handled in the facility is associated with an introduced facility, a receiving section configured to receive, from the customer, an introduction request of the facility together with the specification information, and a proposal section configured to calculate similarity between the specification information of the introduction request and the specification information of the introduction record when receiving the introduction request, and select a facility having a higher calculated similarity from the introduction record to propose the selected facility to the customer.

## Description

### Technical Field

The present specification discloses a facility introduction support system.

### Background Art

Conventionally, there has been known a system which searches for a facility to be introduced and proposes the searched facility to the customer when the customer introduces the facility. For example, Patent Literature 1 discloses that, when introducing a facility such as a power generating facility, a facility to be proposed to the customer is searched for with reference to a facility database based on attribute information including installation environment information sent from an information terminal of the customer.

### Patent Literature

Patent Literature 1: JP-A-2018-014019

### Summary of the Invention

### Technical Problem

Incidentally, as a facility introduced by a customer, a facility for performing an operation on a target object such as a workpiece can be exemplified. In the facility, an appropriate facility will differ depending on a shape or a dimension of the target object, a content of an operation, or the like. Therefore, as in the above-described system, in a proposal using attribute information including installation environment information of the customer, it may be difficult to propose an appropriate facility.

A main object of the present disclosure is to more appropriately propose a facility for performing an operation on a target object.

### Solution to Problem

The present disclosure adopts the following means to achieve the main object described above.

According to an aspect of the present disclosure, there is provided a facility introduction support system for supporting a customer when the customer introduces a facility, the facility introduction support system including: a storage section configured to store an introduction record in which specification information of the facility including information of at least one of a target object and a work content to be handled in the facility is associated with an introduced facility; a receiving section configured to receive, from the customer, an introduction request of the facility together with the specification information; and a proposal section configured to calculate similarity between the specification information of the introduction request and the specification information of the introduction record when receiving the introduction request, and select a facility having a higher calculated similarity from the introduction record to propose the selected facility to the customer.

In the facility introduction support system of the present disclosure, the introduction record is stored, in which specification information of the facility including information of at least one of the target object and the work content to be handled in the facility is associated with the introduced facility Then, when the introduction request of the facility is received from the customer together with the specification information, the similarity between the specification information of the introduction request and the specification information of the introduction record is calculated, and the facility having the higher calculated similarity is selected from the introduction record and proposed to the customer. As a result, it is possible to propose a facility closer to the specification information requested by the customer among the introduced facilities. Accordingly, it is possible to more appropriately propose a facility for performing an operation on the target object without causing the customer to select a necessary facility.

### Brief Description of Drawings

Fig. 1 is a configuration diagram schematically illustrating a configuration of facility introduction support system 10.
Fig. 2 is an explanatory diagram schematically illustrating marketplace MP.
Fig. 3 is a configuration diagram schematically illustrating a configuration of work system 60.
Fig. 4 is an explanatory diagram illustrating an example of module DB 30.
Fig. 5 is an explanatory diagram illustrating an example of introduction record DB 35.
Fig. 6 is a flowchart illustrating an example of module introduction correspondence processing.
Fig. 7 is a flowchart illustrating an example of request receiving processing.
Fig. 8 is an explanatory diagram illustrating an example of an automatic proposal request screen.
Fig. 9 is a flowchart illustrating an example of search processing.
Fig. 10 is a flowchart illustrating an example of proposal processing.
Fig. 11 is an explanatory diagram illustrating an example of a proposal list screen.
Fig. 12 is an explanatory diagram illustrating an example of a proposal detail screen.

### Description of Embodiments

Next, embodiments of the present disclosure will be described with reference to the drawings.

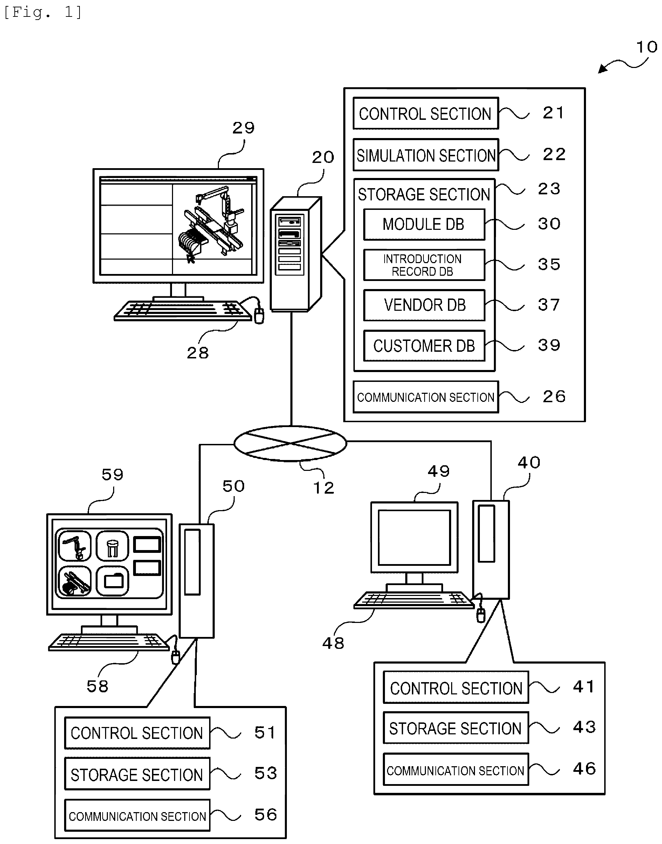

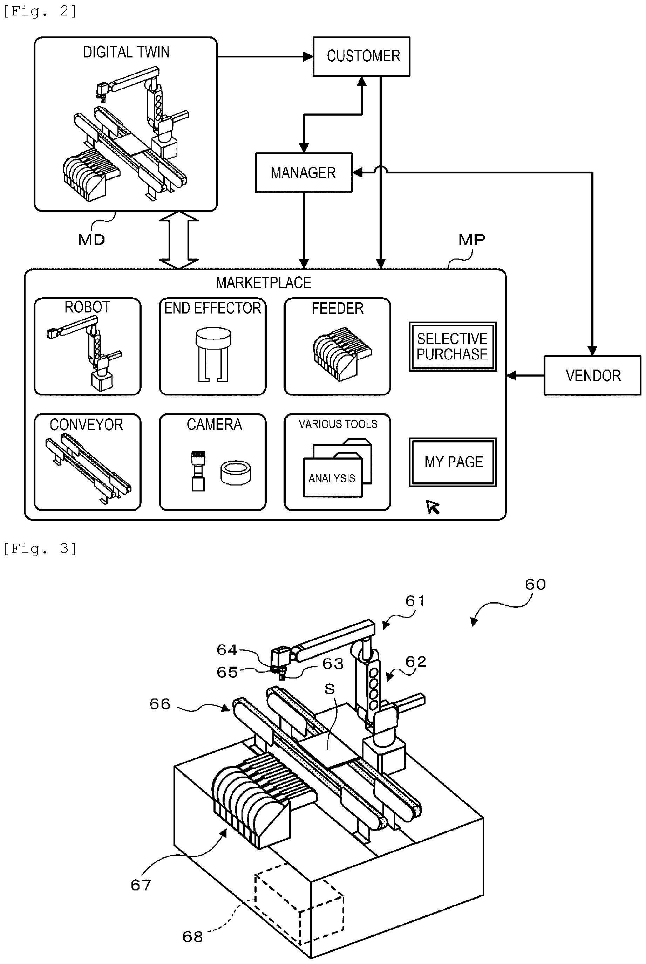

Fig. 1 is a configuration diagram schematically illustrating a configuration of facility introduction support system 10 according to the present embodiment, Fig. 2 is an explanatory diagram schematically illustrating marketplace MP, and Fig. 3 is a configuration diagram schematically illustrating a configuration of work system 60. As illustrated in Fig. 1 and Fig. 2, facility introduction support system 10 includes management server 20 that manages marketplace MP for a customer to purchase various facilities or devices (hereinafter, referred to as modules) provided by a vendor. In facility introduction support system 10, management server 20 is connected to vendor terminal 40 or customer terminal 50 via network 12. Although one vendor terminal 40 or one customer terminal 50 is illustrated in Fig. 1, actually, multiple vendor terminals 40 and multiple customer terminals 50 are connected to each other.

Management server 20 includes control section 21, simulation section 22, storage section 23, and communication section 26. Control section 21 includes a CPU, a ROM, a RAM, or the like, and controls the entire server such as management of marketplace MP. Simulation section 22 builds model MD (digital twin, refer to Fig. 2) such as work system 60 (refer to Fig. 3), in which modules that can be purchased by marketplace MP are combined, in a virtual space, and executes simulation using model MD in the virtual space. Storage section 23 is configured by an HDD or the like, and stores various application programs, various databases (DBs), or the like. Communication section 26 is connected to network 12 or the like, and communicates with vendor terminal 40, customer terminal 50, or the like. Various instructions or the like by a manager are inputted to management server 20 from input section 28 such as a keyboard or a mouse. In addition, management server 20 displays various information on display section 29 such as a display. Management server 20 is not limited to include simulation section 22 or storage section 23 (various DBs), the simulation section may be configured as a separate device from management server 20, or the data server storing various DBs may be configured as a separate device from management server 20.

Vendor terminal 40 includes control section 41 having a CPU, a ROM, a RAM, or the like, storage section 43 such as an HDD for storing various application programs or various data, and communication section 46 connected to network 12 or the like to communicate with management server 20 or the like. Various instructions or the like by the vendor are inputted to vendor terminal 40 from input section 48 such as a keyboard or a mouse. Moreover, vendor terminal 40 displays various information such as a registration screen for registering the module data of the module to be provided in marketplace MP on display section 49 such as a display.

Similar to vendor terminal 40, customer terminal 50 includes control section 51, storage section 53, and communication section 56. Communication section 56 may communicate with control device 68 of work system 60 described later via network 12 or the like. Various instructions or the like by the customer are inputted to customer terminal 50 from input section 58 such as a keyboard or a mouse. In addition, customer terminal 50 displays various information such as a top screen (purchase screen) of marketplace MP, model MD of the simulation, and an execution result of the simulation on display section 59 such as a display.

Here, an example of work system 60 in which modules that can be purchased by marketplace MP are combined will be described. For example, work system 60 can be configured as a system for performing a predetermined operation by robot 61, and in the example illustrated in Fig. 3, in addition to robot 61, board conveyance device 66 and feeder 67 are provided. For example, examples of the predetermined operation include a mounting work or the like in which a workpiece such as a mechanical component or an electronic component is picked up by robot 61 and mounted on board S. Robot 61 includes vertical articulated type robot arm 62 and control device 68 that controls the entire system including an operation of robot arm 62. Moreover, in addition to end effector 63 serving as a work tool being detachably attached to a distal link of robot arm 62, camera 64 for imaging an image and lighting 65 such as a ring light disposed coaxially with camera 64 are attached to the distal link. Examples of end effector 63 include an electromagnetic chuck, a mechanical chuck, a suction nozzle, or the like. Board conveyance device 66 conveys board S by a pair of belt conveyors. Feeder 67 is configured as a tape feeder that feeds a tape in which multiple workpieces are accommodated at predetermined intervals. Feeder 67 is not limited to the tape feeder, and may be a tray feeder or the like that supplies a tray on which the multiple workpieces are disposed. Control device 68 is configured by a CPU, a ROM, an HDD, a RAM, or the like, and stores a system program or the like for managing entire work system 60 in addition to an operation program of robot 61. Moreover, although not illustrated, an operation program of board conveyance device 66 is stored by a Programmable Logic Controller (PLC) of board conveyance device 66, and an operation program of feeder 67 is stored by a PLC of feeder 67. Each of robot 61 (robot arm 62), end effector 63, camera 64, lighting 65, board conveyance device 66, and feeder 67 constituting work system 60 is referred to as a module.

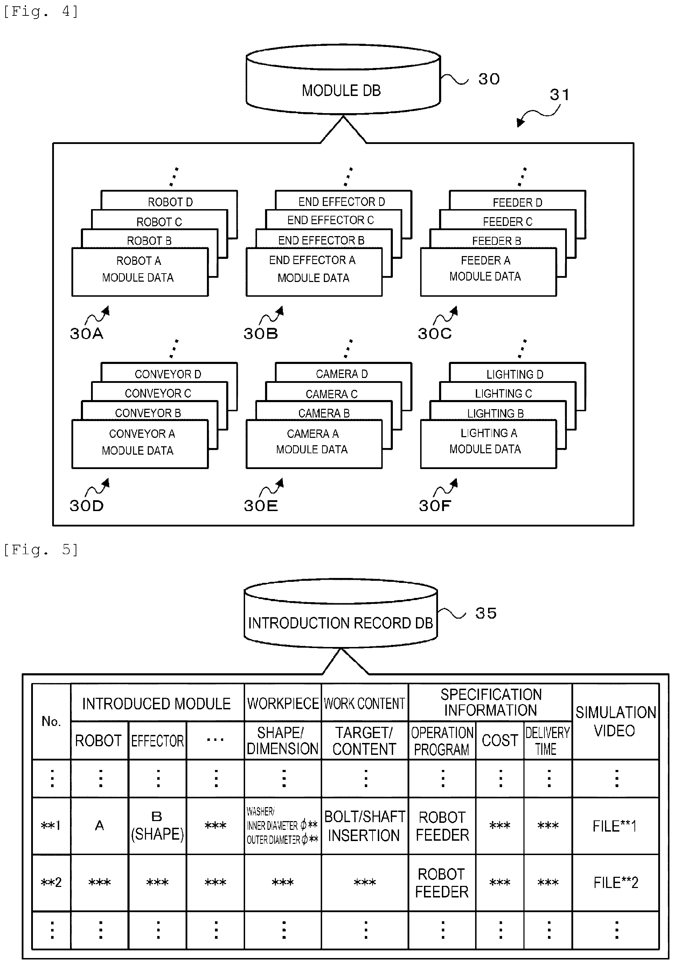

Storage section 23 of management server 20 stores module DB (database) 30 illustrated in Fig. 4, introduction record DB 35 illustrated in Fig. 5, vendor DB 37, and customer DB 39. Although not illustrated, vendor DB 37 registers a name of the vendor for which authentication registration has been performed, a vendor ID unique to each vendor, a contact address such as an e-mail address, an address, information on a type of the module provided by the vendor, or the like. In addition, although not illustrated, customer DB 39 registers a name of the customer for whom authentication registration has been performed, a customer ID unique to each customer, a contact address such as an e-mail address, an address, a purchase history of the customer, or the like.

Module DB 30 registers module data or the like registered by the vendor from vendor terminal 40 via the registration screen, and multiple module data 31 are registered for each type of module. For example, the multiple module data 31 are divided into robot data 30A, end effector data 30B, feeder data 30C, conveyor data 30D, camera data 30E, and lighting data 30F as illustrated in Fig. 4 and registered. In robot data 30A, module data of robot arm 62 (robot A) or module data of other various robots B to D is registered. The various robots may be a horizontal articulated type robot or a parallel link type robot in addition to a vertical articulated type robot. These module data include shape data such as three-dimensional CAD data of each of robots A to D, an operation program, or the like. Similarly, module data including shape data of end effector 63 (end effector A) detachable from robot A or other types of end effectors B to D detachable from robots A to D are registered in end effector data 30B. In addition, module data including shape data or operation programs of feeder 67 (feeder A) and other types of feeders B to D are registered in feeder data 30C. Module data including shape data, operation programs, or the like of conveyor A or other types of conveyors serving as board conveyance device 66 are registered in conveyor data 30D. Module data including shape data, specifications, or the like of camera 64 (camera A) or other types of cameras B to D are registered in camera data 30E. Module data including shape data, specifications, or the like of lighting 65 (lighting A) or other types of lighting B to D are registered in lighting data 30F. In addition, although not illustrated, module data including shape data, physical property data, or the like of a representative workpiece of a work target are also registered in module DB 30. The module data of the workpiece may be registered by a vendor or a manager requested by a customer, and may be used in the simulation using model MD.

On a top screen of marketplace MP displayed on customer terminal 50 or the like, purchase requests and browsing of these modules, purchase requests or browsing of various tools, automatic proposal of the modules, login to the customer's My page, or the like can be made. As illustrated in Fig. 2, for example, icons or tool icons for respective types of modules such as a robot, an end effector, a feeder, a conveyor, and a camera (here, including lighting), a selection purchase button, an automatic proposal button, a login button to My page, and the like are displayed on the top screen. When the customer selects an icon of a desired module after operating (clicking) the selection purchase button by an operation input using input section 58, a module selection screen (not illustrated) for displaying a list of the relevant type of module data in a selectable manner is displayed. For example, when the customer selects the icon of the robot, each module data 31 of robots A to D is displayed in a list, and thus, the customer can select and purchase a necessary module from module data 31. It should be noted that the module data displayed in the list is registered in module DB 30. In addition, when the customer selects the icon of the tool after operating the selection purchase button, a tool selection screen (not illustrated) that displays a list of various tools in a selectable manner is displayed. The customer can select and purchase a necessary tool from among the tools. Examples of the various tools include an analysis tool that collects and analyzes information such as an operation status of each module or a frequency of abnormality occurrence, a proposal tool that proposes an improvement proposal such as changing a module from an analysis result, a layout tool that efficiently lays out a module, or the like. It should be noted that the customer can select the icon of the module or the icon of the tool without clicking the purchase button to browse the contents of the modules or the tools displayed in a list. In addition, when the customer operates the automatic proposal button, an automatic proposal request screen described later is displayed, and thus, marketplace MP can propose a module suitable for the specification of the facility requested by the customer. That is, marketplace MP has an automatic proposal function of the module, and details thereof will be described later. In addition, when the customer logs in to the My Page, it is possible to confirm a purchase history of the module, content and change history of the module to be introduced, contact matters from the management server 20 or the vendor, or the like.

In addition, in introduction record DB 35 in Fig. 5, various specification information of the module including the workpiece information or the work content information is registered in association with the information on the module introduced in the past to each customer. As the information of the module, identification information and shapes of each module introduced to robot 61 (robot arm 62), end effector 63, camera 64, lighting 65, board conveyance device 66, feeder 67, or the like are registered. The information of the workpiece includes information such as the shape or dimension of the workpiece. The information of the work content includes content information of a target shape or a target dimension of a target on which the workpiece is to be placed, whether the workpiece is to be aligned on board S or inserted into a shaft of a bolt on board S, or the like. For example, in the case of an operation of inserting a washer into the shaft of the bolt, a shape of the workpiece (washer), an inner/outer diameter of the washer, shaft insertion of the bolt, and the like are registered. In addition, operation programs, operation parameters, costs, delivery times, and the like of robot 61, board conveyance device 66, feeder 67, and the like are registered as the specification information. The operation program includes a ladder program or the like. The operation parameter includes a content that can be set for a mechanism such as an operation speed (conveyance speed) or an operation direction (conveyance direction) of the conveyor of board conveyance device 66. It should be noted that information on work ability of each module, an installation area, information on the vendor, or the like may be registered as the specification information. For example, examples of the information on the work ability include information on an operation speed, an operation range, a portable weight, a positional accuracy, or the like of robot arm 62, a conveyance speed and a portable weight of board conveyance device 66, a supply speed of feeder 67, and the like. As the installation area, a floor area necessary for installation when each module is combined and introduced is registered. In addition, a video file as a result of the simulation executed by simulation section 22 is also registered in introduction record DB 35 in association with the introduced module.

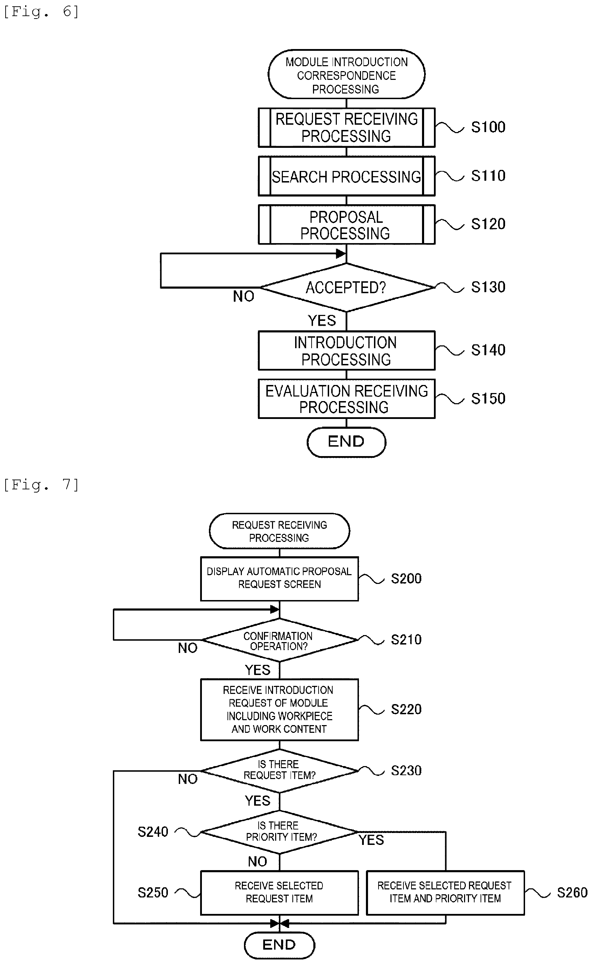

Next, the operation of facility introduction support system 10 configured as described above, particularly, a correspondence processing when the automatic proposal is selected from the top screen and the module is proposed and introduced to the customer using the automatic proposal function of marketplace MP will be described. Fig. 6 is a flowchart illustrating an example of module introduction correspondence processing. This processing is executed by control section 21 of management server 20. In this processing, first, control section 21 of management server 20 performs request receiving processing for receiving the introduction request of the module from the customer who has selected the automatic proposal (S100), and performs search processing for searching for an appropriate module based on the received introduction request (S110). Then, control section 21 performs proposal processing for proposing the searched module to the customer (S120), and waits for the customer to accept an order of the module (S130). When the customer accepts the order, control section 21 performs introduction processing for causing the vendor to order the module to be introduced in the customer (S140), performs evaluation receiving processing for receiving an evaluation of the introduced module from the customer (S150), and terminates the module introduction correspondence processing. Although not illustrated, control section 21 may register the evaluation received in S140 in introduction record DB 35. It should be noted that, instead of the automatic proposal, when the customer selects a necessary module from the module selection screen, control section 21 builds model MD with which the module is combined, and the simulation section 22 performs the simulation using the model MD. With a result of this simulation, a module (model MD) is proposed to the customer waiting for the customer to accept the order. When the order is accepted, control section 21 performs the same processing as in S140 and S150, and registers the information of the introduced module, the specification information of the module, the operation program, the operation parameter, the cost, the delivery time, the result of the simulation, or the like in introduction record DB 35. Hereinafter, the request receiving processing of S100, the search processing of S110, and the proposal processing of S120 will be described in order.

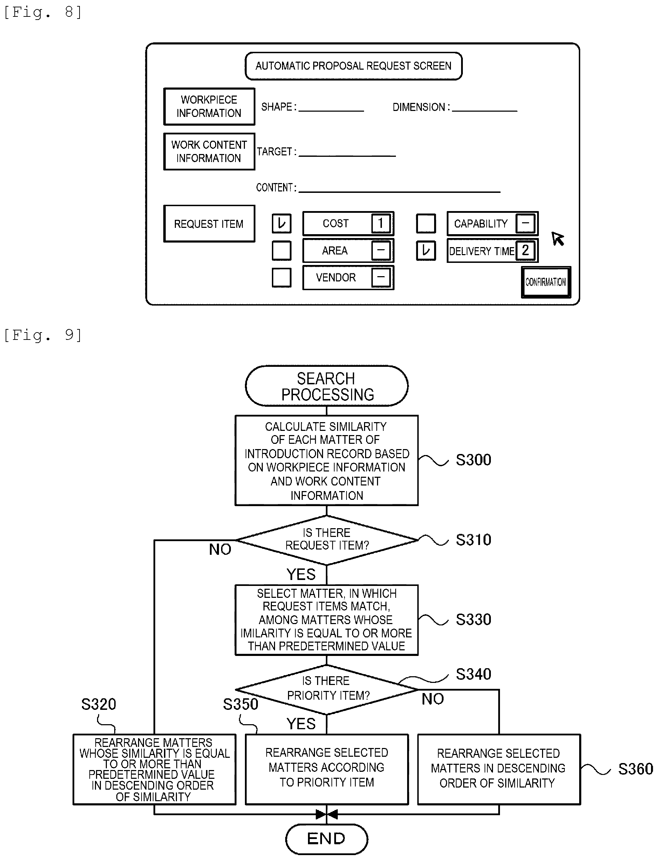

Fig. 7 is a flowchart illustrating an example of the request receiving processing. In the request receiving processing, first, control section 21 causes display section 59 of customer terminal 50 to display the automatic proposal request screen illustrated in Fig. 8 (S200), and waits for a confirmation operation by the customer (S210). In the automatic proposal request screen, the customer can input workpiece information such as the shape or dimension of the workpiece, work content information such as the work target object or the work content, or select the request item. It should be noted that the present invention is not limited to an example in which the customer inputs the information, and information may be selected from a pull-down menu or the like. As the request items, the introduction cost or the production capability of the module, the installation area, the delivery time, the vendor, or the like can be selected using check boxes. Although not illustrated, when the customer checks the check box, a setting screen for the corresponding request item is opened, and thus, detailed settings can be performed. For example, when the customer checks the cost check box, it is possible to set an upper limit cost or the like from the setting screen. In addition, when the customer selects multiple request items, it is possible to set a priority item from the multiple request items. For example, Fig. 8 illustrates a state in which the cost and the delivery time are selected, a priority order of the cost is set to the first order, and a priority order of the delivery time is set to the second order. The customer inputs the information, selects the request item, sets a priority item (priority order), or the like, and then operates a confirmation button to request the automatic proposal.

When the confirmation operation is performed in S210, control section 21 receives an introduction request of the module including the workpiece information and work content information (S220), and determines whether there is the selected request item (S230) and whether there is the priority item (S240), respectively. When it is determined in S230 that there is no selected request item, control section 21 terminates the request receiving processing. In addition, when it is determined in S230 and S240 that there is the selected request item but the priority item is not set, control section 21 receives the selected request item (S250), and terminates the request receiving processing. Then, when it is determined in S230 and S240 that there is the selected request item and the priority item is set, control section 21 receives the selected multiple request items and the priority item among them (S260), and terminates the request receiving processing.

Fig. 9 is a flowchart illustrating an example of the search processing. In the search processing, first, control section 21 calculates similarity of each matter of the introduction record based on the workpiece information and the work content information received in the request receiving processing, and the workpiece information and the work content information registered in the introduction record (S300). In S300, control section 21 numerically analyzes multiple features such as the shape or dimension of the workpiece included in the workpiece information, and the target object or the content included in the work content information, and calculates feature amount vectors thereof. Then, control section 21 calculates similarity between the feature amount vector of the matter received in the request receiving processing and the feature amount vector of each matter of the introduction record, for example, by using a cosine similarity or the like. The calculation of the similarity is not limited to the method, and may use a Euclidean distance or the like, or may use machine learning such as a neural network. Next, control section 21 determines whether there is the request item received from the customer (S310), and when it is determined that there is no request item, control section 21 rearranges the matters whose similarity calculated in S300 is equal to or more than a predetermined value in a descending order of similarity (S320), and terminates the search processing.

Meanwhile, when it is determined that there is the request item received from the customer, control section 21 selects a matter in which the request item registered in the introduction record among the matters whose similarity calculated in S300 is equal to or more than the predetermined value matches the request item received from the customer (S330). When multiple request items are received from the customer, control section 21 may select a matter in which any one of the multiple request items matches each other, but when the number of matters in which any of the matching items matches is large, such as several tens or more, control section 21 may select a matter in which all of the multiple request items match.

Subsequently, control section 21 determines whether there is the priority item received from the customer (S340), and when it is determined that there is the priority item, control section 21 rearranges the matters selected in S330 according to the priority item (S350), and terminates the search processing. In S350, control section 21 rearranges the items with the highest priority order from the matter with the highest degree of matching. For example, when the priority order of costs is the highest, control section 21 rearranges the costs in order from the lowest cost, when the priority order of areas is the highest, control section 21 rearranges the areas in order from the lowest area, and when the priority order of capabilities is the highest, control section 21 rearranges the capabilities in order from the highest capability. In addition, when the priority order of delivery times is the highest, control section 21 rearranges the delivery times in the order from the earliest delivery time, and when the priority order of vendors is the highest, control section 21 rearranges the vendors so that the vendors matching each other are ranked higher. It should be noted that when there are the multiple matters having the same degree of matching of the items having the highest priority order, control section 21 may rearrange the items in the order of the highest degree of matching of the items having the next highest priority order. When it is determined in S340 that there are no priority items, control section 21 rearranges the matters selected in S330 in descending order of similarity (S360), and terminates the search processing. It should be noted that instead of executing the rearrangement in descending order of similarity in S360, control section 21 may rearrange the request items in descending order of the number of matching request items.

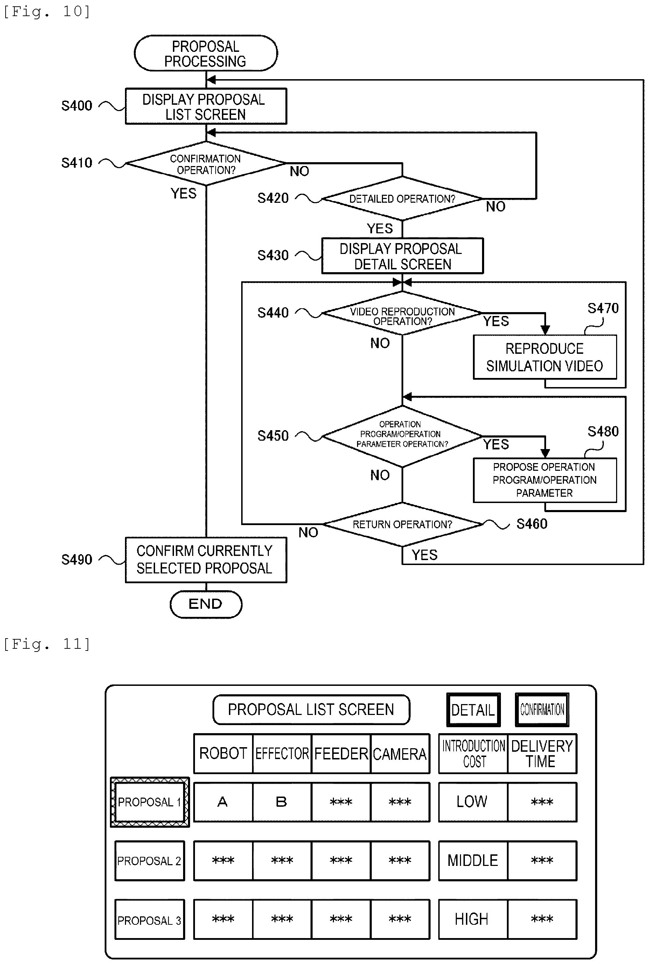

Fig. 10 is a flowchart illustrating an example of the proposal processing. In the proposal processing, first, control section 21 causes display section 59 of customer terminal 50 to display a proposal list screen illustrated in Fig. 11 (S400), and waits until a confirmation operation is performed by the customer (S410) or a detailed operation is performed (S420). In the proposal list screen, as illustrated in Fig. 11, for example, multiple proposals such as proposals 1 to 3 are arranged according to the rearrangement of the search processing illustrated in Fig. 9 and displayed in a list. Here, since the priority order of the costs is highest among the request items, it is assumed that a list is displayed in order from a matter where the costs are low. Each of the proposals 1 to 3 is the matter registered in introduction record DB 35, and the information of the introduced module is displayed. In the proposal list screen, when the detail button is operated in a state where any proposal is selected, the screen transitions to the detail screen of the currently selected proposal, and when the confirmation button is operated, the currently selected proposal can be confirmed.

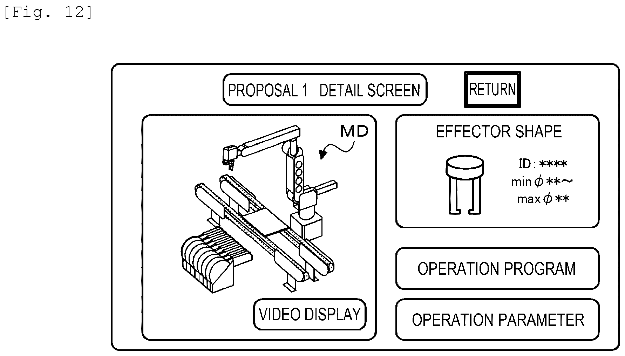

When the detail button is operated in S420, control section 21 causes display section 59 of customer terminal 50 to display a proposal detail screen illustrated in Fig. 12 (S430). The proposal detail screen of Fig. 12 is provided for each proposal of the proposal list screen, and illustrates a screen of the proposal 1 as an example. An image of model MD in which modules to be introduced are combined, a video display button for simulation using model MD, shape information of the end effector, a display button for displaying operation programs or operation parameters, a return button for returning to the proposal list screen, and the like are displayed on the proposal detail screen. When the proposal detail screen is displayed, control section 21 waits until the customer performs a reproduction operation of a simulation video using the video display button (S440), performs a display operation using the display button of the operation program or the operation parameter (S450), or performs a return operation using the return button (S460).

When it is determined in S440 that the reproduction operation of the simulation video is performed, control section 21 reproduces a simulation video result (S470). As a result, it is possible to allow the customer to easily grasp the operation of model MD combining the proposed modules. In addition, when it is determined in S450 that the display operation of the operation program or the operation parameter has been performed, control section 21 displays the operation program or the operation parameter of the robot or the feeder (S480). It should be noted that the operation program or the operation parameter is not limited to those for displaying all of them, may display only a part of the operation or a representative content, or may be not limited to those for displaying but may be downloaded to customer terminal 50. In addition, when it is determined in S460 that the return operation has been performed, control section 21 returns the step to S400 to cause the proposal list screen to be displayed. Then, when it is determined in S410 that the confirmation operation has been performed, control section 21 confirms the currently selected proposal (S490), and terminates the proposal processing. Although not illustrated, a change in the content of the proposal may be received from the customer in the proposal processing. In this case, for example, changes of some of the modules may be received from the customer, and new model MD may be generated and simulated.

Here, correspondence relationships between constituent elements of the present embodiment and constituent elements of the present disclosure will be clarified. Facility introduction support system 10 of the present embodiment corresponds to a facility introduction support system, storage section 23 of management server 20 corresponds to a storage section, control section 21 of management server 20 that executes S100 of the module introduction correspondence processing in Fig. 6 corresponds to a receiving section, and control section 21 of management server 20 that executes S110 and S120 of the processing corresponds to a proposal section. Moreover, simulation section 22 of management server 20 corresponds to a simulation section. Further, end effector 63 corresponds to a gripping device, and robot 61 (robot arm 62), board conveyance device 66, feeder 67, and the like correspond to an operation device.

Facility introduction support system 10 described above stores introduction record DB 35 in which the workpiece information or the work content information and the introduced module are associated with each other in storage section 23, and when the introduction request of the module is received from the customer together with the workpiece information or the work content information, the module having the higher similarity is selected from the introduction record DB 35 and proposed to the customer. Therefore, since facility introduction support system 10 can appropriately propose a module closer to the customer's request among the introduced modules, it is possible to suppress a burden of the customer selecting the module and prevent the module from being selected mistakenly.

In addition, since facility introduction support system 10 proposes the module to the customer together with the video result of the simulation of the selected module, it is possible to cause the customer to easily determine whether the module is introduced, and it is possible to suppress occurrence of a change request of the module due to a difference in recognition by the customer or the like. In addition, facility introduction support system 10 proposes the module to the customer to include the shape information of end effector 63 and the operation program and operation parameter such as robot 61 (robot arm 62). Accordingly, since the customer can easily grasp the content thereof and use the content as a material for determining whether to introduce the module, particularly, it is possible to more appropriately propose the module to a customer who has little experience in introducing the module.

In addition, since facility introduction support system 10 receives, from the customer, the request item of at least one of the introduction cost, the work ability, the installation area, the introduction delivery time, and the vendor relating to the facility requested to be introduced, and selects the facility satisfying the request item, it is possible to propose an appropriate facility according to the request item of the customer. In addition, since facility introduction support system 10 can receive the priority item when receiving the multiple request items from the customer, and preferentially proposes the facility satisfying the priority item from among the facilities satisfying the request item, it is possible to propose a more appropriate facility according to the priority order of the request items.

It is needless to say that the present disclosure is not limited to the embodiments described above, and may be implemented in various aspects as long as they belong to a technical scope of the present disclosure.

For example, in the above embodiment, although the priority item can be received when the multiple request items are received. However, the configuration is not limited to this, and the priority item may not be received. In this case, a facility having a large number of items satisfying the request items may be proposed. Alternatively, the processing is not limited to the processing for receiving the request item, and the request item may not be received.

In the above embodiment, the module is proposed to the customer to include the shape information of the end effector 63, the operation program of robot 61 (robot arm 62), and the like. However, the configuration is not limited to this. For example, only one of the shape information of end effector 63 and the operation program of robot 61 (robot arm 62) may be included. Alternatively, the module may be proposed to the customer without including the shape information of end effector 63, the operation program of robot 61 (robot arm 62), or the like.

In the above embodiment, the module is proposed to the customer to include the video result of the simulation. However, the configuration is not limited to this, and the module may be proposed to the customer without including the video result of the simulation.

In the above embodiment, work system 60 configured by the multiple modules including robot 61 is exemplified. However, the configuration is not limited to this, and the work system may be a system configured by the multiple modules and may not include robot 61. In addition, the present invention is not limited to a case where the multiple modules are proposed at a time, but may be a case where only one module is proposed.

Here, the facility introduction support system of the present disclosure may be configured as follows. For example, in the facility introduction support system of the present disclosure, the support system may further include a simulation section configured to perform a simulation using a model on a virtual space of a facility to be introduced, in which the storage section may store the introduction record by associating a result of the simulation with the introduced facility, and the proposal section may propose the facility to the customer together with the result of the simulation of the selected facility. As a result, the customer can determine whether to introduce the facility by confirming the simulation result of the proposed facility, and thus, the facility can be proposed more appropriately.

In the facility introduction support system of the present disclosure, the storage section may include shape information of a gripping device, which grips the target object in the introduced facility, in the specification information, and the proposal section may propose a facility including shape information of the gripping device. Moreover, in the facility introduction support system of the present disclosure, the storage section may include any of an operation program and an operation parameter of an operation device responsible for an operation of the work content in the introduced facility, in the specification information, and the proposal section may propose a facility including any of the operation program and the operation parameter of the operation device. Here, the shape of the gripping device for gripping the target object or the operation program and the operation parameter of the operation device responsible for the operation of the work content are important items when introducing the facility, and are items that are difficult to be selected and set by a customer who has little experience in introducing the facility. Therefore, by proposing the facility including these contents, it is possible to more appropriately propose the facility to the customer.

In the facility introduction support system of the present disclosure, the receiving section may receive the introduction request by including at least one request item of an introduction cost, work ability, an installation area, an introduction delivery time, and a vendor relating to a facility for which introduction is requested in the specification information, the storage section may store the introduction record by including the request item in the specification information, and the proposal section may select a facility satisfying the request item in the introduction request from among facilities having a higher similarity. As a result, it is possible to propose an appropriate facility according to the request items of the customer.

In the facility introduction support system of the present disclosure, the receiving section can receive a priority item to be prioritized among multiple request items when receiving the multiple request items, and the proposal section may preferentially propose a facility satisfying the priority item among the facilities satisfying the request items. As a result, it is possible to propose a more appropriate facility according to the priority order of the request items of the customer.

### Industrial Applicability

The present disclosure can be applied to a manufacturing industry of a facility introduction support system or the like.

### Reference Signs List

10: Facility introduction support system, 12: Network, 20: Management server, 21, 41, 51: Control section, 22: Simulation section, 23, 43, 53: Storage section, 26, 46, 56: Communication section, 28, 48, 58: Input section, 29, 49, 59: Display section, 30 Module DB, 30A: Robot data, 30B: End effector data, 30C: Feeder data, 30D: Conveyor data, 30E: Camera data, 30F: Lighting data, 31: Module data, 35: Introduction record DB, 37: Vendor DB, 39: Customer DB, 40: Vendor terminal, 50: Customer terminal, 60: Work system, 61: Robot, 62: Robot arm, 63: End effector, 64: Camera, 65: Lighting, 66: Board conveyance device, 67: Feeder, 68: Control device, MD: Model, MP: Marketplace, S: Board

## Claims

1. A facility introduction support system for supporting a customer when the customer introduces a facility, the facility introduction support system comprising:
a storage section configured to store an introduction record in which specification information of the facility including information of at least one of a target object and a work content to be handled in the facility is associated with an introduced facility;
a receiving section configured to receive, from the customer, an introduction request of the facility together with the specification information; and
a proposal section configured to calculate similarity between the specification information of the introduction request and the specification information of the introduction record when receiving the introduction request, and select a facility having a higher calculated similarity from the introduction record to propose the selected facility to the customer.

2. The facility introduction support system according to claim 1, further comprising:
a simulation section configured to perform a simulation using a model on a virtual space of a facility to be introduced,
wherein the storage section stores the introduction record by associating a result of the simulation with the introduced facility, and
the proposal section proposes the facility to the customer together with the result of the simulation of the selected facility.

3. The facility introduction support system according to claim 1 or 2,
wherein the storage section includes shape information of a gripping device,
which grips the target object in the introduced facility, in the specification information, and
the proposal section proposes a facility including shape information of the gripping device.

4. The facility introduction support system according to any one of claims 1 to 3,
wherein the storage section includes any of an operation program and an operation parameter of an operation device responsible for an operation of the work content in the introduced facility, in the specification information, and
the proposal section proposes a facility including any of the operation program and the operation parameter of the operation device.

5. The facility introduction support system according to any one of claims 1 to 4,
wherein the receiving section receives the introduction request by including at least one request item of an introduction cost, work ability, an installation area,
an introduction delivery time, and a vendor relating to a facility for which introduction is requested in the specification information,
the storage section stores the introduction record by including the request item in the specification information, and
the proposal section selects a facility satisfying the request item in the introduction request from among facilities having a higher similarity.

6. The facility introduction support system according to claim 5,
wherein the receiving section is capable of receiving a priority item to be prioritized among multiple request items when receiving the multiple request items, and
the proposal section preferentially proposes a facility satisfying the priority item among the facilities satisfying the request items.
